# EUROPEAN PATENT APPLICATION

(11) **EP 1 498 192 A1**
(43) Date of publication of application: **19.01.2005**
(21) Application number: 03447185.4
(22) Date of filing: 16.07.2003
(51) Int. Cl.: B09C 1/08, B09C 1/00, E02D 3/12

(54) **A process and device for immobilising impurities present in silt**

(71) Applicant: DEC, 2070 Zwijndrecht (BE)
(72) Inventor: Vandycke, Stefaan, 8450 Bredene (BE)
(74) Representative: Luys, Marie-José

(57) **Abstract**

This invention relates to a process and device for immobilizing, inactivating and/or neutralizing impurities present in silt, the silt layer being covered with a layer of a material in finely distributed state, after which at least part of the silt layer is worked loose, a hardenable additive composition is injected in the silt layer and is mixed with the silt layer for binding, immobilizing, inactivating and/or neutralizing the impurities in the silt.

## Description

This invention relates to a process for immobilizing impurities present in silt, sediment or water bottoms according to the preamble of the first claim.

For it has been found that silt, deposited on the sea bed, the bottom of running streams and still bodies of water, contains impurities originating from dumping of industrial sewage and waste water. Examples are PCB pollution originating from dumping transformers and condensers from power stations and tributyltin pollution originating from fungicide substances used for treating ships. Due to the continuous contact of the silt with the water layer above, or with the water running over the silt, there is a risk that the impurities leach out, enter the water and eventually end up in the drinking water circuit. Consequently, there is a need for a process with which pollution in the silt can be immobilized, in order to minimize leaching out to the water phase.

It is therefore the aim of this invention to provide a process and a device for immobilizing and/or neutralizing impurities present in silt, sediments or water bottoms.

According to the invention the silt layer is covered with a covering layer of a material in finely distributed state, following which at least part of the silt layer is worked loose, an additive composition is injected in the silt layer and mixed with the silt layer for immobilizing, binding and/or neutralizing the impurities present in the silt layer.

The covering layer may be a naturally present layer or may be a layer that is applied prior to the injection of the additive composition.

The process of this invention offers the advantage that impurities can be immobilized or neutralized in the silt on site. This means that the silt can be subjected to the desired treatment and the impurities can be immobilized or neutralized or deactivated on site. This is a significant advantage vis-à-vis existing off-site techniques designed to remove the impurities. With the process according to the invention it is not necessary to first remove the silt layer, then transport it to a location where the impurities are extracted.

Applying a top layer of a fine-grain material prevents particles, during the working loose of the silt layer and the mixing of the silt layer with the additive composition, from escaping from the treated layer, swirling up and ending up in the layer above or in the water layer above. In addition, thanks to the presence of the top layer, the layer with the immobilized and/or neutralized impurities is shielded from the rest of the area and the water above.

It was found that with the process according to this invention, efficient binding, immobilization and/or neutralization of the impurities in the silt mixed with the binding agent is obtained. Leaching experiments have not been able to prove any measurable leaching out of immobilized impurities, during exposure to water of a silt layer stabilized according to the invention. Therefore, with this invention an economically interesting process is provided for on-site immobilization and/or neutralization of impurities, which allows binding of the impurities to the silt.

According to a preferred embodiment of this invention the additive composition comprises a hardenable binding agent composition, and the silt hardens after mixing with the binding agent composition. Introduction of this step allows simultaneous immobilization/neutralization of the impurities and constructive stabilization of the silt layer.

It is also possible to work loose part of the top layer simultaneously with the silt layer and to mix it with the additive composition in order to structure the silt, to provide a more structured composition as well as better constructive support.

The additive composition that is applied in the process according to this invention preferably comprises a grout mixture comprising cement. This mixture is preferred because it simultaneously provides binding and immobilization of the polluted silt, as well as acting as a constructive stabilization of the silt layer.

This invention also relates to a device for mixing polluted silt with a hardenable additive composition.

The device according to this invention comprises a rotor head rotating around at least one axle. The rotor head is provided with one or more blades for working loose the silt and one or more injection openings for injecting at high pressure the additive composition in the silt. The presence of blades allows working a larger surface of silt, the blades being responsible for working loose the silt and mixing the silt with the additive composition.

The rotor head is preferably mounted to an arm, and rotating vis-à-vis the arm around a rotational axis transverse to the arm. The rotor head is preferably also mounted pivotally vis-à-vis the arm. The ability to rotate around the transverse axis allows for deeper silt layers to be reached and for silt layers with greater thickness to be worked loose in their entirety, and to be injected.

The arm is preferably mounted pivotally in the vertical direction, making it possible to work a surface at a greater distance from the device, together with which the depth at which the silt layer is worked, can be limited. The additive composition is injected over the entire depth that is worked loose.

It is, however, also possible to mount the arm tiltable on a ladder of a cutter suction dredge or a similar device.

A cutter suction dredge comprises a pontoon on which is located a spud pole for anchoring the pontoon. The pontoon comprises side anchors at opposite sides, which are provided to be alternately hauled or lowered vis-à-vis the side of the pontoon, thus generating a swinging motion of the pontoon. As a result of the swinging motion of the pontoon, the arm mounted on the ladder also performs a swinging motion and a surface with the width of the swinging motion of the pontoon can be worked.

By placing the spud pole in a movable pole carriage, the pontoon, at the end of a swinging motion, can be moved forward or backward, in order to work a surface at a greater distance from the pontoon.

A further embodiment consists in the bottom part of a ladder mounted to the pontoon, in stead of the pontoon itself, being pivotally mounted. This may be accomplished, for example by means of hydraulic cylinders that alternately push and pull, causing the ladder part to rotate around a fixed point and a rotor head mounted on the bottom end of the ladder to perform a swinging motion vis-à-vis the fixed point.

The position of the ladder is preferably adjustable, in order to allow to control the depth at which the rotor head works the silt layer.

It is also possible to mount the arm on a bucket dredge or on its ladder. A bucket dredge generally comprises a pontoon anchored by a bow anchor provided with four anchors mounted sideways. The pontoon also has a rear anchor. By alternately hauling and lowering each of the anchors, a swinging motion about the bow anchor is generated. Lowering the bow anchor and hauling the rear anchor allows the pontoon to perform a forward or backward movement, so that a surface of a width determined by the swinging motion of the pontoon can be worked.

The position of the ladder is preferably adjustable in order to allow the depth at which the rotor head works the silt layer, to be controlled.

The blades of the device according to this invention are provided with a plurality of first injection openings, preferably at the front, for injecting the additive composition in the rotational direction of the axle at a high pressure, between 50 and 2000 bar, to reduce the rotational moment. The high pressure injection is intended to break the structure of the silt mass, so that the blades can penetrate the silt mass and rotate. By injection of the additive composition at increased pressure the silt mass is precut, and a relatively small quantity of additive composition suffices to accomplish intense hydraulic mixing of the additive composition with the silt.

The blades also preferably comprise a plurality of second injection openings for injecting the additive composition in a direction opposite to the rotational direction of the blade, at a lower pressure of between 5 and 500 bar. By injection at low pressure a larger volume of additive composition can be injected. The pressure and rate of flow at which the additive composition is injected, will usually be set taking into account the desired travel speed of the rotor head and the consistency of the silt.

The high-pressure injection openings can be placed before, behind or in the vicinity of the blades, but preferably are at an end of the blades. The exit flow direction of the injection openings is preferably adjustable, for injection of the additive composition at a position in front of, behind, next to or near the blades, depending on the nature of the silt layer.

Preferably care is taken that the high and low pressure injection openings are distributed evenly over the blades, in such a manner that sufficient overlap is provided for the exit flow of adjacent injection openings.

Preferably the high and low pressure nozzles are placed such that the difference in pressure results in a rotational moment on the mixing blade. Thus, the mechanical power needed to move the mixing blade through the soil is reduced.

The rotor head of the device according to this invention is preferably mounted on an arm that is movable from and to a fixing point. This allows for a larger surface of the silt layer to be worked, without it being necessary to move the device. This can be of importance for example when working large surfaces of silt, if it is intended to work a submerged silt layer from the shore. By injecting the additive composition in the silt a shielding layer is formed for the underlying soil, that prevents migration of impurities present in the silt and the underlying layers. At the same time preferably only the silt layer is hardened in order to provide constructive support. The underlying layers are preferably not hardened.

The device according to this invention is preferably mounted on a movable support which is provided with a control system for controlling the movement and the rotation of the rotor head and the injection of the additive composition.

The invention is further clarified by means of the enclosed figures and description of these figures.
Figure 1 shows a view of a preferred embodiment of the device according to the invention.

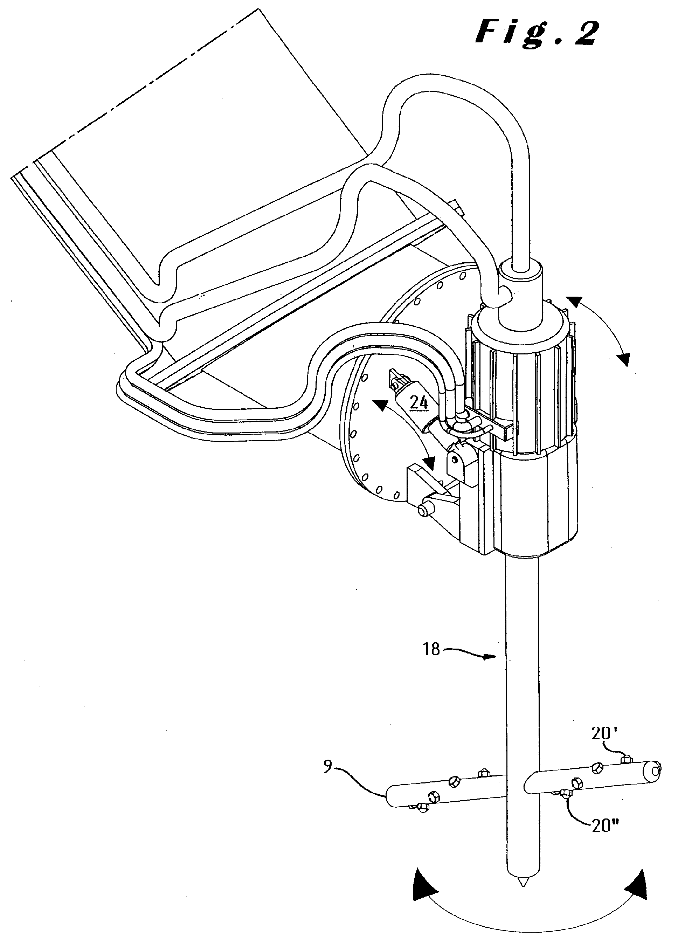

Figure 2 shows a view of a possible embodiment of the rotor head of the device according to the invention.

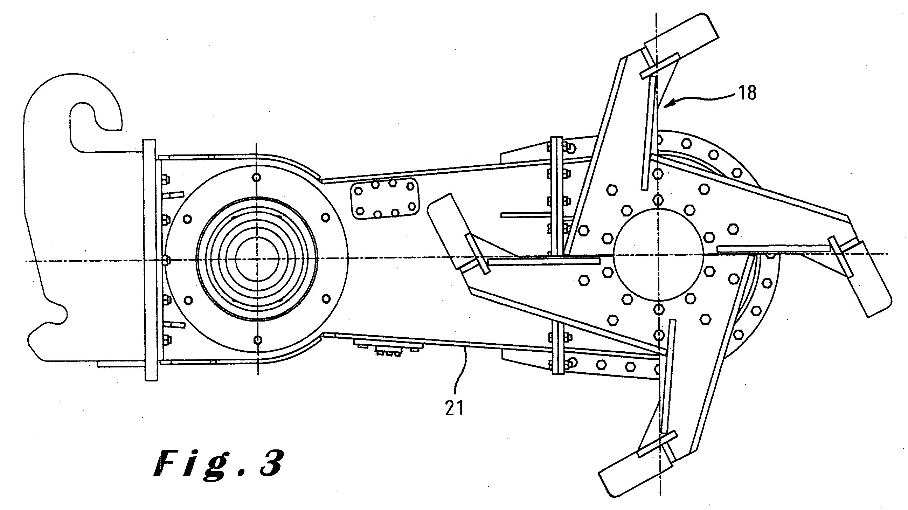

Figure 3 shows a cross cut of an alternative embodiment of the rotor head of the device according to the invention.

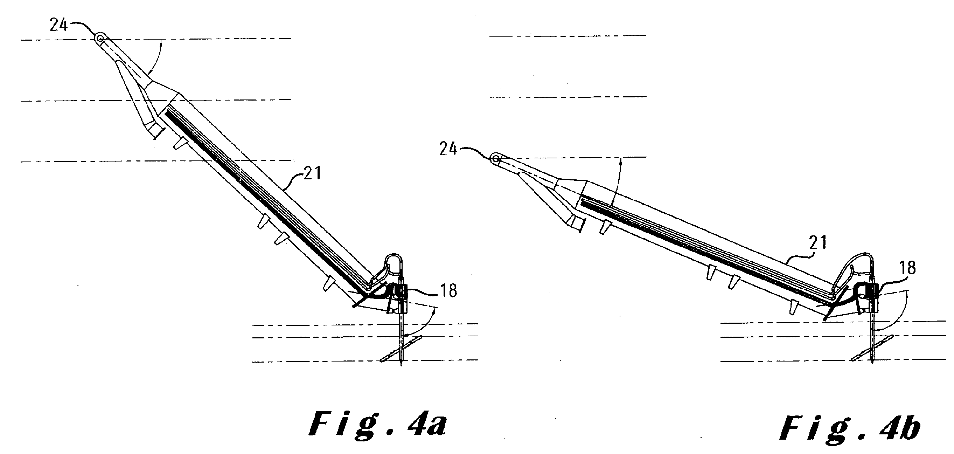

Figure 4 shows an injection unit positioned at two different angles with respect to the soil layer to be worked.
Figure 5 shows a cutter suction device provided with the injection unit according to this invention.

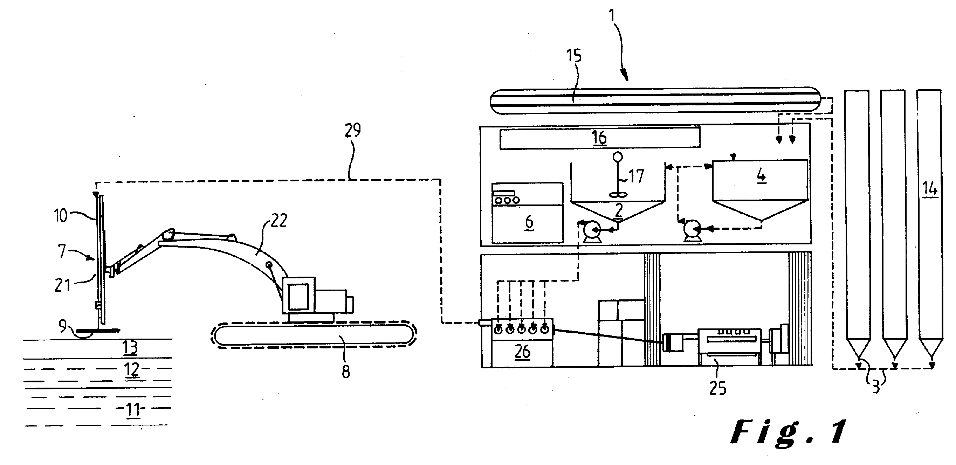

The preferred embodiment shown in figure 1 of the device according to the invention comprises a mixing device 1 for producing an additive composition 2. The mixing device 1 comprises at least one supply 3 for supplying the components for producing the additive composition.

The components that are used for preparing the additive composition are preferably stored in separate storage containers. The additive composition used in the process of this invention preferably comprises a grout mixture.

The first component, cement, is preferably stored in one or more mobile cement-holding storage silos 14. At the bottom of the silos closed conveyer screws are provided through which cement is fed to the mixing device 1.

The grout mixture used in the process according to this invention, contains, apart from cement, one or more additional components or admixtures, which are preferably mixed with the cement in the mixing device 1. These admixtures are stored in containers 15 provided thereto.

Water for the creation of the grout mixture 2 is stored in one or more water containers 16.

The speed at which the individual components are fed to the mixing device 1 is preferably adjustable, in order to allow the concentration of the individual components to be set taking into account the nature of the silt mixture and the nature of the impurities that are to be immobilized. To that end the separate feed systems 3 can, for example, be controlled by a central control unit 6, that, for example, is computer controlled.

The mixing device 1 comprises means 4, for example a turbo mixer, for mixing the individual components in order to obtain a grout mixture that is as homogenous as possible. As soon as the desired mixing degree of the components is reached, and a grout mixture with sufficient homogeneity is obtained, the grout mixture is transported to a surge tank 17 and temporarily stored therein. For the transportation of the grout mixture 2 use can be made of a low or high pressure pump 26, for example, or any other device known to the man skilled in the art.

Preferably also a cleaning device is provided for cleaning the mixing device 1 and the low or high pressure pump.

The grout mixture 2 is transported from the surge tank 17 or from the mixing device 1 to an injection unit 7, for injection of the grout mixture 2 in the silt 10. In addition, it is possible to mix all components of the grout mixture beforehand and transport it through a supply duct 29 from the mixing device 1 to the injection unit 7.

The injection unit 7 comprises an arm 21, a rotor head 18 being mounted on the end of the arm. The rotor head 18 may comprise both a horizontal and a vertical rotational axle, or only one of both. The rotor head 18 is provided with at least one blade. The rotor head comprises one or more blades 9 that are preferably elongated and have the shape of a cylinder for example. The rotor head is responsible for mechanically working loose the silt.

The rotor head 18, preferably each blade 9 of the rotor, is provided with one or more injection openings 20, through which the grout mixture is injected in the silt at increased pressure. Preferably two types of injection openings 20 are discerned. The first injection openings 20' are provided for injection of the additive composition in the rotational direction of the blade 9 at a high pressure of between 50 and 2000 bar. The second injection openings 20" are provided for injection of the additive composition in a direction opposite to the rotational direction of the blade 9, at a low pressure of between 5 and 50 bar. The injection openings 20 can be placed at various locations on the blade 9, but are preferably located at the front of, behind, in the vicinity of or on the end of the blades 9. Preferably the exit flow direction of the injection openings 20 is adjustable, for injecting the additive composition in a position in front of, behind, next to or near the blades. The number of injection openings of the first and second type as well as their positioning, will usually be chosen by the man skilled in the art, taking into account the nature of the silt layer, the desired injection pressure, the desired injection flow rate and the mixing degree, and is selected such that dead points, where no injection occurs, are avoided as much as possible.

To make possible the working of a relatively large silt surface without it being necessary to move the rotor head 18, the rotor head 18 is preferably mounted on an arm 21 that is movable from and to a fixing point 24. The fixing point is located for example on a second arm 22, that is placed on a movable support 8. The tiltable construction of the rotor head 18 allows the rotational direction of the head to be altered and the impact on the layer that is to be worked, to be altered. This offers the advantage that the layer thickness that is to be worked by the device, can be varied taking into account tidal motion.

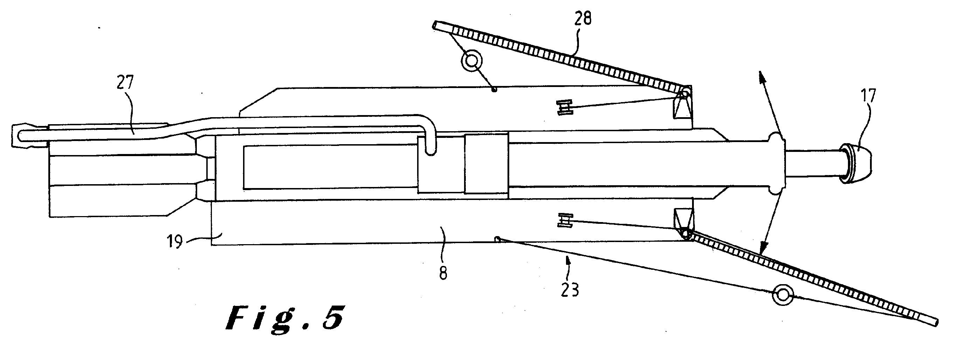

It is also possible to arrange the arm 21 pivotally. This may be accomplished for example by mounting the arm 21 with rotor head 18 on a ladder of a cutter suction dredge or a similar device. This device is shown in figure 5.

A cutter suction dredge 23 comprises a pontoon 19 on which is located a spud pole 27 for anchoring the pontoon. The pontoon 19 comprises, at opposite sides, side anchors 28. By alternately hauling and lowering the side anchors vis-à-vis the side of the pontoon a swinging motion of the pontoon is generated. Due to the swinging motion of the pontoon 19, the arm and injection unit 7 perform a swinging motion also, so that a surface with the width of the swinging motion of the pontoon can be worked.

According to a preferred embodiment the spud pole 27 is placed in a movable pole carriage. By moving the pole carriage the pontoon can be moved forward or backward when finishing a swinging motion, in order to work a larger surface.

It is also possible to mount the arm on a bucket dredge or a similar device. In that case the pontoon is usually anchored by means of a bow anchor, which is provided with four anchors mounted sideways. The pontoon also comprises a stern anchor. By alternately hauling and lowering each of the anchors a swinging motion around the bow anchor is generated. Lowering the bow anchor and hauling the stern anchor allows the pontoon to perform a forward or backward movement, so that a surface can be worked with a width determined by the swinging motion of the pontoon.

### List of used references.

- 1.: mixing device
- 2.: grout mixture
- 3.: supply grout mixture components
- 4.: mixing device
- 5.: outlet mixing device for grout mixture
- 6.: control unit
- 7.: injection unit
- 8.: swamp crane
- 9.: blade
- 10.: drilling mast
- 11.: silt
- 12.: covering layer
- 13.: water layer
- 14.: silo
- 15.: container for admixture
- 16.: water container
- 17.: connecting piece for injection unit
- 18.: rotor head
- 19.: pontoon
- 20.: injection openings
- 21.: arm
- 22.: second arm
- 23.: cutter suction dredge
- 24.: fixing point
- 25.: drive motor
- 26.: pump
- 27.: spud pole
- 28.: side anchor
- 29.: supply duct

## Claims

1. A process for immobilizing, inactivating and/or neutralizing impurities present in silt, **characterized in that** the silt layer is covered with a layer of a material in a finely distributed state, following which at least part of the silt layer is worked loose, a hardenable additive composition is injected in the silt layer and is mixed with the silt layer for binding, immobilizing, inactivating and/or neutralizing the impurities in the silt.

2. A process according to claim 1, **characterized in that** the additive composition is a hardenable composition that hardens after mixing with the silt layer.

3. A process according to claim 1 or 2, **characterized in that** at least part of the layer of the finely distributed substance is mixed with the additive composition and hardens together with the silt layer and the additive composition.

4. A process according to any of claims 1-3, **characterized in that** the hardenable additive composition is a grout mixture comprising cement.

5. A process according to claim 4, **characterized in that** the grout mixture comprises several components, and one or several components is injected in the silt layer individually.

6. A process according to any of claims 1 to 5, **characterized in that** prior to the application of the finely distributed material at least part of the silt layer is removed.

7. A device for immobilizing, inactivating and/or neutralizing of impurities present in silt, comprising a rotor head, rotating around at least one axle, the rotor head being provided with at least one or several blades for working loose the silt and each blade containing one or several injection openings for injecting, at increased pressure, an additive composition in the silt.

8. A device according to claim 7, **characterized in that** at least one blade is provided with a plurality of first injection openings for injecting the additive composition in the rotational direction of the axle at a high pressure, of between 50 and 2000 bar, and with second injection openings for injecting the additive composition in a direction opposite to the rotational direction of the axle, at a lower pressure of between 5 and 500 bar.

9. A device according to claim 7 or 8, **characterized in that** the injection openings are placed at the front of, behind, in the vicinity of or on the end of the blades.

10. A device according to claim 7-9, **characterized in that** the injection openings have an adjustable direction of exit, for injecting the additive composition in a position in front of, behind, next to or near the blades.

11. Device according to any of claims 7-10, **characterized in that** the rotor head is mounted on a tiltable arm that is movable from and to a fixing point.

12. Device according to any of claims 7-11, **characterized in that** the device is mounted on a movable support that is provided with a control system for controlling the movement and the rotation of the arm and the pressure at which the additive composition is injected through the first and second injection openings.

13. Device according to any of claims 7-12, **characterized in that** a mixing device is provided, for mixing previously determined quantities of binding agent and water into an additive composition, and means for transporting the additive composition to the injection openings.
